# EUROPEAN PATENT APPLICATION

(11) **EP 4 036 071 A1**
(43) Date of publication of application: **03.08.2022**
(21) Application number: 20869092.5
(22) Date of filing: 21.05.2020
(51) Int. Cl.: C04B 35/40, H01F 1/10, H01F 41/02, C04B 35/64

(54) **PERMANENT MAGNET MATERIAL AND PREPARATION METHOD THEREFOR**

(30) Priority: 25.09.2019 CN 201910910793
(71) Applicant: Hengdian Group DMEGC Magnetics Co. Ltd., Jinhua, Zhejiang 322118 (CN)
(72) Inventor: YANG, Wuguo, Jinhua, Zhejiang 322118 (CN); SHENTU, Jinang, Jinhua, Zhejiang 322118 (CN); HE, Zhenyu, Jinhua, Zhejiang 322118 (CN); DING, Boming, Jinhua, Zhejiang 322118 (CN); HE, Junyi, Jinhua, Zhejiang 322118 (CN)
(74) Representative: Cabinet Beaumont
(86) International application number: PCT/CN2020/091462
(87) International publication number: WO 2021/057051

(57) **Abstract**

Provided are a permanent magnet material and a preparation method therefor. The permanent magnet material comprises AB₁₂O₁₉, wherein A includes Sr, Ca and La, and B includes Fe and Co; and on the basis that the total mass of an oxide of A and an oxide of B is 100%, the mass fraction of the oxide of A is 12-18 wt%, and the mass fraction of the oxide of B is 82-88 wt%. The preparation method comprises: 1) crushing a first raw material mixture to obtain a primary crushed material; 2) pre-firing the primary crushed material to obtain a pre-fired material; 3) mixing the pre-fired material with a second raw material mixture, and crushing same to obtain a secondary crushed material; 4) subjecting the secondary crushed material to magnetic field molding to obtain a molded body; and 5) pre-heating and sintering the molded body to obtain the permanent magnet material.

## Description

### TECHNICAL FIELD

The present application belongs to the technical field of magnetic materials and relates to a permanent magnet material and a preparation method therefor.

### BACKGROUND

Intrinsic coercivity (Hcj) refers to the intensity of the applied reversed magnetic field required to reduce the residual magnetization Mr of the magnet to zero. The intrinsic coercivity, as one of the most important performance indexes of magnetic materials, mainly reflects the ability of resistance to demagnetization of permanent magnets. The intrinsic coercivity of conventional AB₁₂O₁₉ permanent magnet material is not high, generally between 3000 Oe to 5000 Oe. Therefore, permanent magnet ferrite materials, when used in permanent magnet motors, are mostly made into tile shape, and in order to prevent motors from demagnetization, magnetic tiles are usually made thick.

The ferrite magnet with AB₁₂O₁₉ composition is a permanent magnet material with excellent magnetic characteristics, is used as one of the key basic functional materials of permanent magnet direct current motors, can satisfy the use requirements of motors in various environments of strong demagnetizing field, low temperature, high altitude and the like, has high sensitivity and stability, and thus can be widely used in various motors with high power, high speed and high torque, such as premium automobile motors (ABS motors, starting motors, etc.), motorcycle starting motors, household appliances and electric tool motors and the like.

The initial permanent magnet ferrite materials are mainly prepared by using magnetoplumbite-type hexagonal strontium ferrite (SrFe₁₂O₁₉) and barium ferrite (BaFe₁₂O₁₉). The magnetic properties of sintered permanent magnet ferrites are mainly determined by two parameters, that is, residual magnetic flux density (Br) and intrinsic coercivity (Hcj). Br mainly depends on saturation magnetization (Ms), degree of orientation (f) in the molding process, and final magnet density (p), and Hcj mainly depends on material anisotropic field strength (H_{A} = 2K₁/Ms, where K₁ is the anisotropic field constant of the material) as well as lattice defect, grain boundary structure and single domain grain ratio of the final magnet.

CN101880155A discloses a method for manufacturing a ferrite permanent magnet material, which includes the following step: crushing and mixing a prepared pre-sintered material in ball milling equipment, where the crushing mode is wet milling; and also includes the following step: adding sodium hydroxide in an amount which is 0.1% to 2.0% based on the weight of the pre-sintered material in a wet milling process. The intrinsic coercivity of permanent magnet materials obtained by this method is low.

CN102815934A discloses a high-performance calcium lanthanum ferrite permanent magnet material and a preparation method thereof. The high-performance calcium lanthanum ferrite permanent magnet material has a chemical formula of CaO_{0.2∼0.5}·(La₂O₃)_{0.25∼0.4}·(Fe₂O₃)_{5.2∼5.8}·CoO_{0.25-0.45}.

CN106882962A discloses a high-magnetic-energy M-type barium ferrite permanent magnet material and a preparation method thereof. The high-magnetic-energy M-type barium ferrite permanent magnet material is prepared from the following components in parts by mol: 35 to 60 parts of an iron source, 4 to 5 parts of barium nitrate, 2 to 3 parts of polyacrylamide, 4 to 7 parts of copper aminoacetate, 4 to 5 parts of cobalt acetylacetonate, 4 to 5 parts of nickel sulfamate, 0.5 to 1.5 parts of hydrazine hydrate, 0.5 to 2 parts of cetyl trimethyl ammonium bromide, 1 to 5 parts of metal stearate, 0 to 2.5 parts of rare earth oxide and 0 to 6 parts of bittern through the steps of material mixing, balling milling, ultrasonic treatment, sintering and the like.

However, the intrinsic coercivity of permanent magnet materials obtained by the above-mentioned methods is low.

### SUMMARY

The summary of the subject matter described herein is given below in detail. This summary is not intended to limit the protection scope of the claims.

The object of the present application is to provide a permanent magnet material and a preparation method therefor. The permanent magnet ferrite material provided by the present application has both a high residual magnetic flux density (Br) and an ultra-high intrinsic coercivity (Hcj) and has excellent performance. The intrinsic coercivity (Hcj) of the permanent magnet material provided by the present application may be increased to 5800 Oe or even about 6000 Oe while it is ensured that the residual magnetic flux density (Br) does not decrease.

To achieve this object, the present application adopts the following technical solutions.

In a first aspect, the present application provides a permanent magnet material including AB₁₂O₁₉, wherein A includes Sr, Ca, and La, and B includes Fe and Co; and on the basis that the total mass of an oxide of A and an oxide of B is 100%, a mass fraction of the oxide of A is 12 wt% to 18 wt%, such as 12 wt%, 14 wt%, 16 wt%, 17 wt%, 18 wt%, etc., and a mass fraction of the oxide of B is 82 wt% to 88 wt%, such as 82 wt%, 84 wt%, 86 wt%, 87 wt%, 88 wt%, etc.

The permanent magnet material provided by the present application may obtain a high residual magnetic flux density (Br) and an ultra-high intrinsic coercivity (Hcj) through the mutual cooperation of the above-mentioned elements. In the present application, the ratio of each element in AB₁₂O₁₉ is calculated according to the mass fraction of the oxide corresponding to each element.

Optional technical solutions of the present application are set forth below and not intended to limit the technical solutions of the present application. Technical objects and beneficial effects of the present application may be better achieved through the optional technical solutions set forth below.

As an optional technical solution of the present application, in the permanent magnet material, on the basis that the total mass of an oxide of A and an oxide of B is 100%, a mass fraction of SrO is 0.5 wt% to 5.0 wt%, such as 0.5 wt%, 1 wt%, 2 wt%, 3 wt%, 4 wt%, 5 wt%, etc., a mass fraction of La₂O₃ is 5.0 wt% to 10.0 wt%, such as 5 wt%, 6 wt%, 7 wt%, 8 wt%, 9 wt%, 10 wt%, etc., a mass fraction of CaO is 0.5 wt% to 3.0 wt%, such as 0.5 wt%, 1 wt%, 2 wt%, 3 wt%, etc., a mass fraction of Fe₂O₃ is 81 wt% to 87 wt%, such as 81 wt%, 82 wt%, 83 wt%, 84 wt%, 85 wt%, 86 wt%, 87 wt%, etc., and a mass fraction of Co₂O₃ is 1 wt% to 4.0 wt%, such as 1 wt%, 2 wt%, 3 wt%, 4 wt%, etc.

In the present application, the intrinsic coercivity (Hcj) of the permanent magnet material may be increased to 5800 Oe or even about 6000 Oe through the above-mentioned optional composition ratios.

As an optional technical solution of the present application, in the permanent magnet material, A further includes Ba and/or other La series rare earth elements other than La.

Optionally, when A includes Ba, a mass fraction of Ba is calculated based on BaO; and on the basis that the total mass of an oxide of A and an oxide of B is 100% a mass fraction of BaO is 0.1 wt% to 0.5 wt%, such as 0.1 wt%, 0.2 wt%, 0.3 wt%, 0.4 wt%, 0.5 wt%, etc., and the mass fraction of La₂O3 is 6.0 wt% to 8.5 wt%, such as 6 wt%, 7 wt%, 8 wt%, 8.5 wt%, etc.

Optionally, in the permanent magnetic material, B further includes other transition elements of fourth period other than iron and cobalt, which optionally includes any one or a combination of at least two of Al, Cr or Mn, and wherein Al and Cr can improve the intrinsic coercivity of permanent magnet material products.

Optionally, when B includes Al, a mass fraction of Al is calculated based on Al₂O₃; and on the basis that the total mass of an oxide of A and an oxide of B is 100%, a mass fraction of Al₂O₃ is 0.5 wt% to 2.0 wt%, such as 0.5 wt%, 1 wt%, 1.5 wt%, 2 wt%, etc., and the mass fraction of Co₂O₃ is 1.5 wt% to 3.0 wt%, such as 1.5 wt%, 2 wt%, 2.5 wt%, 3 wt%, etc.

Optionally, when B includes Cr, a mass fraction of Cr is calculated based on Cr₂O₃; and on the basis that the total mass of an oxide of A and an oxide of B is 100%, a mass fraction of Cr₂O₃ is 0.3 wt% to 1.5 wt%, such as 0.3 wt%, 0.5 wt%, 1 wt%, 1.2 wt%, 1.5 wt%, etc., and the mass fraction of Co₂O₃ is 1.5 wt% to 3.0 wt%, such as 1.5 wt%, 2 wt%, 2.5 wt%, 3 wt%, etc.

Optionally, when B includes Mn, a mass fraction of Mn is calculated based on MnO; and on the basis that the total mass of an oxide of A and an oxide of B is 100%, a mass fraction of MnO is 0.1 wt% to 0.4 wt%, such as 0.1 wt%, 0.2 wt%, 0.3 wt%, 0.4 wt%, etc., and the mass fraction of Co₂O₃ is 1.5 wt% to 3.0 wt%, such as 1.5 wt%, 2 wt%, 2.5 wt%, 3 wt%, etc.

Optionally, the permanent magnet material further includes Si, a mass fraction of Si is calculated based on SiO₂, and on the basis that the total mass of an oxide of A and an oxide of B is 100%, a mass fraction of SiO₂ is 0.02 wt to 0.8 wt, such as 0.02 wt, 0.05 wt, 0.1 wt, 0.2 wt, 0.4 wt, 0.6 wt, 0.8 wt, etc. In this application, SiO₂ in the permanent magnet material reacts with the residual oxide of A in the main components of the pre-sintered material, such as CaO, SrO and secondarily added CaO, to generate non-magnetic silicates which are dispersed among magnetic ferrite particles, thereby preventing magnetic grains from growing, improving the sintering, enhancing the magnet density, and finally improving the comprehensive magnetic properties of the material.

In a second aspect, the present application provides a method for preparing the permanent magnet material described in the first aspect. The method includes the following steps:
(1) crushing a first raw material mixture to obtain a primary crushed material; where the first raw material mixture includes an iron source, a strontium source, a calcium source, a lanthanum source and a cobalt source;
(2) pre-sintering the primary crushed material obtained in step (1) to obtain a pre-sintered material;
(3) mixing the pre-sintered material obtained in step (2) and a second raw material mixture and crushing same to obtain a secondary crushed material; where the second raw material mixture includes a calcium source;
(4) performing magnetic field molding on the secondary crushed material obtained in step (3) to obtain a molded body; and
(5) pre-heating and sintering the molded body obtained in step (4) to obtain the permanent magnet material.

In the preparation method provided by the present application, the first raw material mixture added in step (1) is used for providing the major phase of the permanent magnet material, the calcium source in the first raw material mixture plays a substitution role for strontium; and the second raw material mixture added in step (3) is used for improving the grain boundary and improving the performance of the permanent magnet material product. The first raw material mixture and the second raw material mixture together provide the elements required to compose the permanent magnet material provided herein.

In the preparation method provided by the present application, the pre-heating in step (5) is used to remove a solvent (e.g., water) in the molded body as well as a dispersant if the dispersant exists.

In this application, element sources may be oxides or carbonates of corresponding elements to ensure that corresponding oxides can be obtained through the preparation method provided by the present application. For example, the iron source is iron red, the strontium source is strontium carbonate, the calcium source is calcium carbonate, the lanthanum source is lanthanum oxide, the cobalt source is cobalt(III) oxide, the chromium source is chromium(III) oxide, the silicon source is silicon dioxide, the aluminum source is aluminium(III) oxide, and the barium source is barium oxide or barium carbonate.

In the present application, barium oxide or barium carbonate impurities included in the strontium source may be used as a barium source, or a barium source may be directly added in step (1); and manganese impurities included in the iron source may be used as a manganese source, and a manganese source generally does not need to be added alone.

As an optional technical solution of the present application, the crushing in step (1) is performed by wet mixing crushing, optionally, by wet ball milling. The crushed material obtained after wet crushing is a slurry.

Optionally, the crushing in step (1) is performed for 3 hours to 5 hours, such as 3 hours, 3.5 hours, 4 hours, 4.5 hours, 5 hours, etc.

Optionally, the primary crushed material in step (1) has an average solid particle size of less than or equal to 0.8 µm, such as 0.8 µm, 0.7 µm, 0.6 µm, 0.5 µm, etc. In the present application, if the solid particles in the slurry of the primary crushed material obtained after mixing are too large, the pre-sintering is prone to be insufficient in the pre-sintering process and the content of generated ferrite phase is low.

Optionally, an average particle size of each element source in the first raw material mixture in step (1) is less than 2 µm, such as 1.9 µm, 1.8 µm, 1.7 µm, 1.6 µm, 1.5 µm, etc.

As an optional technical solution of the present application, the pre-sintering in step (2) is performed in an air atmosphere.

Optionally, the pre-sintering in step (2) is performed at a temperature of 1150°C to 1260°C, such as 1150°C, 1170°C, 1190°C, 1210°C, 1230°C, 1250°C, 1260°C, etc., optionally at 1230°C to 1260°C.

Optionally, the pre-sintering in step (2) is performed for 0.5 hour to 3 hours, such as 0.5 hour, 1 hour, 1.5 hours, 2 hours, 2.5 hours, 3 hours, etc., optionally for 1 hour to 2 hours.

As an optional technical solution of the present application, the crushing in step (3) is performed by wet mixing crushing, optionally, by wet ball milling. The crushed material obtained after wet crushing is the slurry.

Optionally, in addition to the calcium source, the second raw material mixture in step (3) further includes any one or a combination of at least two of a silicon source, a chromium source, an aluminum source, a boron source, a strontium source or a cobalt source. The boron source may be boric acid, but the boron source is generally added in a very small amount and thus is hardly analyzed and reflected in the component analysis.

Optionally, the second raw material mixture in step (3) is a mixture of a calcium source, a silicon source and a cobalt source.

Optionally, in step (3), on the basis that a mass of the pre-sintered material is 100%, a mass fraction of the calcium source in the second raw material mixture is 0.4 wt% to 1.5 wt%, such as 0.4 wt%, 0.5 wt%, 1 wt%, 1.5 wt%, etc.

Optionally, when the second raw material mixture in step (3) includes a silicon source, on the basis that a mass of the pre-sintered material is 100%, a mass fraction of the silicon source is 0.2 wt% to 0.8 wt%, such as 0.2 wt%, 0.4 wt%, 0.6 wt%, 0.8 wt%, etc.

Optionally, when the second raw material mixture in step (3) includes a chromium source, on the basis that a mass of the pre-sintered material is 100%, a mass fraction of the chromium source is 0 wt% to 0.8 wt%, not including 0 wt%, such as 0.1 wt%, 0.2 wt%, 0.4 wt%, 0.6 wt%, 0.8 wt%, etc.

Optionally, when the second raw material mixture in step (3) includes a cobalt source, on the basis that a mass of the pre-sintered material is 100%, a mass fraction of the cobalt source is 0 wt% to 0.8 wt%, not including 0 wt%, such as 0.1 wt%, 0.2 wt%, 0.4 wt%, 0.6 wt%, 0.8 wt%, etc.

Optionally, when the second raw material mixture in step (3) includes an aluminum source, on the basis that a mass of the pre-sintered material is 100%, a mass fraction of the aluminum source is 0 wt% to 0.8 wt%, not including 0 wt%, such as 0.1 wt%, 0.2 wt%, 0.4 wt%, 0.6 wt%, 0.8 wt%, etc.

Optionally, when the second raw material mixture in step (3) includes a boron source, on the basis that a mass of the pre-sintered material is 100%, a mass fraction of the boron source is 0 wt% to 0.8 wt%, not including 0 wt%, such as 0.1 wt%, 0.2 wt%, 0.4 wt%, 0.6 wt%, 0.8 wt%, etc.

Optionally, when the second raw material mixture in step (3) includes a strontium source, on the basis that a mass of the pre-sintered material is 100%, a mass fraction of the strontium source is 0.1 wt% to 1.0 wt%, such as 0.1 wt%, 0.2 wt%, 0.4 wt%, 0.6 wt%, 0.8 wt%, 1.0 wt%, etc.

Optionally, step (3) further includes: adding a dispersant before the crushing. In the present application, the addition of the dispersant can improve the orientation of slurry particles during the magnetic field molding.

Optionally, the dispersant includes any one or a combination of at least two of calcium gluconate, polyvinyl alcohol or sorbitol.

Optionally, an addition amount of the dispersant is 0.2 wt% to 1.2 wt% of the mass of the pre-sintered material, such as 0.2 wt%, 0.4 wt%, 0.6 wt%, 0.8 wt%, 1.0 wt%, 1.2 wt%, etc. In the present application, if the addition amount of the dispersant is too small, the slurry particles of the secondary crushed material cannot be dispersed and the orientation degree in the molding process cannot be improved; if the addition amount is too large, the discharge of organic matters is prone to be insufficient in the subsequent sintering process, leading to the decrease of sintered body density.

Optionally, the secondary crushed material in step (3) has an average solid particle size of less than or equal to 0.65 µm, such as 0.65 µm, 0.6 µm, 0.55 µm, 0.5 µm, etc. In the present application, if the average particle size of the solids in the secondary crushed material is too large, the grain size of the sintered body after sintering is prone to be too large, affecting the coercivity of the sintered body.

As an optional technical solution of the present application, before the magnetic field molding in step (4), the method further includes: adjusting a solid content of the secondary crushed material obtained in step (3) to 65 wt% to 80 wt%, such as 65 wt%, 70 wt%, 75 wt%, 80 wt%, etc.

Optionally, the magnetic field molding in step (4) is performed at a magnetic field strength of more than or equal to 12000 Gs, such as 12000 Gs, 13000 Gs, 14000 Gs, 15000 Gs, etc. In the present application, if the molding magnetic field strength is too low, the degree of orientation of magnetic particles in the molded body is too low.

As an optional technical solution of the present application, the pre-heating in step (5) is performed at a temperature of 200°C to 400°C, such as 200°C, 250°C, 300°C, 350°C, 400°C, etc.

Optionally, the pre-heating in step (5) is performed for 0.5 hour to 2 hours, such as 0.5 hour, 1 hour, 1.5 hours, 2 hours, etc.

Optionally, the sintering in step (5) is performed at a temperature of 1150°C to 1250°C, such as 1150°C, 1175°C, 1200°C, 1225°C, 1250°C, etc., optionally at 1180°C to 1220°C.

Optionally, the sintering in step (5) is performed for 0.5 hour to 3 hours, such as 0.5 hour, 1 hour, 1.5 hours, 2 hours, 2.5 hours, 3 hours, etc., optionally for 0.5 hour to 2 hours.

Optionally, the sintering in step (5) is performed in an oxygen-rich atmosphere, optionally in an air atmosphere. In the present application, the oxygen-rich atmosphere is helpful to reduce the content of Fe²⁺ ions in the sintered body and improve the specific saturation magnetization of the sintered body.

As a further optional technical solution of the preparation method of the present application, the solution includes the following steps:
(1) performing wet ball milling on a first raw material mixture for 3 hours to 5 hours to obtain a primary crushed material; where the first raw material mixture includes an iron source, a strontium source, a calcium source, a lanthanum source and a cobalt source; an average particle size of each element source in the first raw material mixture is less than 2 µm; and the primary crushed material has an average solid particle size of less than or equal to 0.8 µm;
(2) pre-sintering the primary crushed material obtained in step (1) at 1230°C to 1260°C for 1 hour to 2 hours in an air atmosphere to obtain a pre-sintered material;
(3) mixing the pre-sintered material obtained in step (2) with a second raw material mixture and a dispersant, and performing wet ball milling on same to obtain a secondary crushed material; where the second raw material mixture in step (3) is a mixture of a calcium source, a silicon source, a chromium source and a cobalt source; in the second raw material mixture, on the basis that a mass of the pre-sintered material is 100%, a mass fraction of the calcium source is 0.4 wt% to 1.5 wt%, a mass fraction of the silicon source is 0.2 wt% to 0.8 wt%, and a mass fraction of the cobalt source is 0 wt% to 0.8 wt%, not including 0 wt%; the secondary crushed material has an average solid particle size of less than or equal to 0.65 µm; and the addition amount of the dispersant is 0.2 wt% to 1.2 wt% of the mass of the pre-sintered material;
(4) adjusting a solid content of the secondary crushed material obtained in step (3) to 65 wt% to 80 wt%, and performing magnetic field molding on the secondary crushed material at a magnetic field strength of more than or equal to 12000 Gs to obtain a molded body; and
(5) pre-heating the molded body obtained in step (4) at 200°C to 400°C for 0.5 hour to 2 hours, and sintering same at 1180°C to 1220°C for 0.5 hour to 2 hours in an air atmosphere to obtain a permanent magnet material.

Compared with the existing art, the present application has the following beneficial effects.
(1) The permanent magnet material provided by the present application is a ferrite material and possesses both a high residual magnetic flux density (Br) and an ultra-high intrinsic coercivity (Hcj), where the high Br may ensure that the motor has a large output torque and power and the ultra-high Hcj may ensure that the motor has a strong resistance to demagnetization and aging and the ability to work in low temperature. The intrinsic coercivity (Hcj) of the permanent magnet material provided by the present application may reach 6154 Oe.
(2) The preparation method provided by the present application may further improve the performance of permanent magnet material products through the optimization of the process conditions, and has simple operation, short process and low cost, which is beneficial to industrial large-scale production.

Other aspects can be understood after the detailed description is read and understood.

### DETAILED DESCRIPTION

To better illustrate the present application and to facilitate the understanding of the technical solutions in the present application, the present application is further described in detail below. The examples described below are merely simple examples of the present application and not intended to represent or limit the protection scope of the present application. The protection scope of the present application is defined by the claims.

Typical but non-limiting examples of the present application are described below.

### Example 1

In this example, the permanent magnet material was prepared by the following method.
(1) In a process of proportioning materials, various raw materials were selected according to the following material requirements and corresponding weight percentages:
   iron red: the purity of Fe₂O₃ was greater than or equal to 99.5 wt%, the content of Cl⁻ ions was less than or equal to 0.1 wt%, the initial average particle size of particles was 1.6 µm, and the weight percentage of iron red was 83.4%;
   strontium carbonate: the purity of SrCO₃ was greater than or equal to 98.0 wt%, the initial average particle size of particles was 2.1 µm, and the weight percentage of strontium carbonate was 4.31%;
   calcium carbonate: the purity of CaCO₃ was greater than or equal to 99.0 wt%, the initial average particle size of particles was 4.2 µm, and the weight percentage of calcium carbonate was 2.42%;
   lanthanum oxide: the purity of La₂O3 was greater than or equal to 99.0 wt%, the initial average particle size of particles was 4.5 µm, and the weight percentage of lanthanum oxide was 7.08%; and
   cobalt(III) oxide: the purity of Co₂O₃ was greater than or equal to 99.0 wt%, the initial average particle size of particles was 2.5 µm, and the weight percentage of cobalt(III) oxide was 2.78%.

   The above-mentioned raw materials were weighed, and then mixed and ball-milled in a wet ball mill for 5 hours, after which an average particle size was 0.8 µm.
(2) The resulting mixture was dried in an oven, pelletized, pre-sintered at 1240°C in air, and held for 1 hour to obtain a granular pre-sintered material.
(3) Then, 450 g of coarse ground pre-sintered material produced in the above-mentioned manner were weighted; on the basis that the mass of the pre-sintered material was 100%, 0.5 wt% of SiO₂, 0.75 wt% of CaCO₃, 0.4 wt% of Cr₂O₃, and 0.5 wt% of Co₂O₃ were added, 0.6 wt% of calcium gluconate was added as a dispersant, and then 680 ml of deionized water was added as a ball-milling medium; and the resulting mixture was subjected to wet grinding in an improved high-efficiency ball mill for 24 hours, after which an average particle size of the slurry particles was 0.64 µm.
(4) After wet grinding, the resulting to-be-molded slurry was subjected to the water content adjustment so that the solid content of the slurry was adjusted to 70%, and then the slurry was molded, where during pressing, a molding magnetic field of 14000 Oe was applied in the pressing direction. The resulting molded body was a cylinder with a diameter of 43.2 mm and a height of 13 mm, and the molding pressure was 10 MPa.
(5) The molded body was subjected to heat treatment at 300°C for 1 hour to thoroughly remove the organic dispersant, then sintered in air at a heating rate of 150°C/h, and held at 1220°C for 1.5 hours to obtain a permanent magnet material.

The compositions of the pre-sintered material obtained in step (2) and the content of main oxides of the permanent magnet material finally obtained are shown in Table 1. The content of each main oxide was obtained in the following manner: the pre-sintered material and the magnet of this example were ground into powder separately, and the powder was subjected to composition analysis, and this manner is also used in other examples to obtain the content of the main oxides.

**Table 1 Composition analysis results in Example 1**

| Mass fraction/wt% | Fe₂O₃ | SrO | CaO | BaO | La₂O3 | Co₂O₃ | Cr₂O₃ | MnO | SiO₂ |
|---|---|---|---|---|---|---|---|---|---|
| Pre-sintered material | 85.6 | 1.4 | 1.8 | 0.06 | 8.0 | 2.75 | 0 | 0.25 | 0.03 |
| Magnet | 85.2 | 1.1 | 2.0 | 0.05 | 7.45 | 3.10 | 0.30 | 0.20 | 0.40 |

The performance test results of the permanent magnet material prepared in this example are shown in Table 4.

### Example 2

In this example, the permanent magnet material was prepared in the following method.
(1) The selected raw materials were the same as those in Example 1. The weights of various raw materials for constituting these main components were changed and the raw materials were fed. Four tests were carried out and numbered as Examples 2-1, 2-2, 2-3 and 2-4, respectively.
The raw materials were weighed according to the above-mentioned changed weights, mixed and milled in a wet ball mill for 5 hours, after which an average particle size was about 0.8 µm.
(2) The resulting mixture was dried in an oven, pelletized, pre-sintered at 1250°C in air, and held for 2 hours to obtain a granular pre-sintered material. The pre-sintered material was ground and then subjected to composition analysis, and the results are shown in Table 2.

**Table 2 Composition analysis results of the pre-sintered material in Example 2**

| Mass fraction/wt% | Fe₂O₃ | SrO | CaO | BaO | La₂O3 | Co₂O₃ | Al₂O₃ | Cr₂O₃ | MnO | SiO₂ |
|---|---|---|---|---|---|---|---|---|---|---|
| 2-1 | 82.8 | 4.5 | 1.6 | 0.3 | 6.8 | 2.6 | 0.6 | 0.5 | 0.2 | 0 |
| 2-2 | 83.6 | 3.5 | 1.8 | 0.5 | 6.2 | 2.8 | 0.8 | 0.4 | 0.3 | 0.05 |
| 2-3 | 84.2 | 3.1 | 1.1 | 0.1 | 7.2 | 2.1 | 1.1 | 0.8 | 0.2 | 0.03 |
| 2-4 | 85.4 | 0.6 | 1.5 | 0.4 | 8.2 | 1.6 | 1.2 | 0.9 | 0.1 | 0.02 |

(3) Then, 450 g of four coarse ground pre-sintered materials produced in the above-mentioned manner were weighted, respectively; on the basis that the mass of the pre-sintered material was 100%, 0.6 wt% of SiO₂, 0.8 wt% of CaCO₃, and 0.3 wt% of Co₂O₃ were added, 1.0 wt% of calcium gluconate was added as a dispersant, and then 680 ml of deionized water was added as a ball-milling medium; and the resulting mixtures were each subjected to wet grinding in an improved high-efficiency ball mill for 22 hours, after which an average particle size of the slurry particles was 0.62 µm to 0.69 µm.
(4) After wet grinding, the resulting to-be-molded slurries were each subjected to the water content adjustment so that the solid content of the slurries was adjusted to 70%, and then the slurries were each molded, where during pressing, a molding magnetic field of 13000 Oe was applied in the pressing direction. The resulting molded bodies were each a cylinder with a diameter of 43.2 mm and a height of 13 mm, and the molding pressure was 10 MPa.
(5) Then, the molded bodies were each subjected to heat treatment at 300°C for 1 hour to thoroughly remove the organic dispersant, then sintered in air at a heating rate of 150°C/h, and held at 1210°C for 2 hours to obtain a permanent magnet material.

The compositions of the permanent magnet material obtained according to each formula in this example are shown in Table 3, and the performance test results of the permanent magnet material of each formula are shown in Table 4.

### Example 3

In this example, the permanent magnet materials were prepared in the same method as that in Example 1, except that the proportion of raw materials in step (1) was adjusted according to the required composition ratio of the product, and if the required composition ratio could not be reached after the proportion of raw materials in step (1) was reduced, the addition amount of raw materials in step (3) was further reduced to satisfy the composition requirements of the permanent magnet material product of each formula.

The compositions of the permanent magnet material of each formula in this example are shown in Table 3, and the performance test results of the permanent magnet material of each formula are shown in Table 4.

### Example 4

In this example, the permanent magnet material was prepared in the following method.
(1) The same raw materials in the same proportion as those in Example 1 were mixed and ball-milled in a wet ball mill for 4 hours, after which an average particle size was 0.78 µm.
(2) The resulting mixture was dried in an oven, pelletized, pre-sintered at 1150°C in air, and held for 3 hours to obtain a granular pre-sintered material.
(3) Then, 450 g of coarse ground pre-sintered material produced in the above-mentioned manner were weighted; on the basis that the mass of the pre-sintered material was 100%, 0.2 wt% of SiO₂, 0.4 wt% of CaCO₃, 0.4 wt% of Cr₂O₃, and 0.8 wt% of Co₂O₃ were added, 0.2 wt% of calcium gluconate was added as a dispersant, and then 680 ml of deionized water was added as a ball-milling medium; and the resulting mixture was subjected to wet grinding in an improved high-efficiency ball mill for 24 hours, after which an average particle size of the slurry particles was 0.64 µm.
(4) After wet grinding, the resulting to-be-molded slurry was subjected to the water content adjustment so that the solid content of the slurry was adjusted to 65%, and then the slurry was molded, where during pressing, a molding magnetic field of 12000 Oe was applied in the pressing direction. The resulting molded body was a cylinder with a diameter of 43.2 mm and a height of 13 mm, and the molding pressure was 10 MPa.
(5) The molded body was subjected to heat treatment at 200°C for 2 hours to thoroughly remove the organic dispersant, then sintered in air at a heating rate of 150°C/h, and held at 1150°C for 3 hours to obtain a permanent magnet material.

The compositions of the permanent magnet material obtained in this example are shown in Table 3, and the performance test results of the permanent magnet material are shown in Table 4.

### Example 5

In this example, the permanent magnet material was prepared in the following method.
(1) The same raw materials in the same proportion as those in Example 1 were mixed and ball-milled in a wet ball mill for 3 hours, after which an average particle size was 0.8 µm.
(2) The resulting mixture was dried in an oven, pelletized, pre-sintered at 1260°C in air, and held for 0.5 hour to obtain a granular pre-sintered material.
(3) Then, 450 g of coarse ground material produced in the above-mentioned manner were weighted; 0.8 wt% of SiO₂, 1.5 wt% of CaCO₃, 0.8 wt% of Cr₂O₃, and 0.2 wt% of Co₂O₃ were added, 1.2 wt% of calcium gluconate was added as a dispersant, and then 680 ml of deionized water was added as a ball-milling medium; and the resulting mixture was subjected to wet grinding in an improved high-efficiency ball mill for 24 hours, after which an average particle size of the slurry particles was 0.64 µm.
(4) After wet grinding, the resulting to-be-molded slurry was subjected to the water content adjustment so that the solid content of the slurry was adjusted to 80%, and then the slurry was molded, where during pressing, a molding magnetic field of 14000 Oe was applied in the pressing direction. The resulting molded body was a cylinder with a diameter of 43.2 mm and a height of 13 mm, and the molding pressure was 10 MPa.
(5) The molded body was subjected to heat treatment at 400°C for 0.5 hour to thoroughly remove the organic dispersant, then sintered in air at a heating rate of 150°C/h, and held at 1250°C for 0.5 hour to obtain a permanent magnet material.

The compositions of the permanent magnet material obtained in this example are shown in Table 3, and the performance test results of the permanent magnet material are shown in Table 4.

### Example 6

This example is same as Example 1 except that the pre-sintering in step (2) was performed at 1230°C for 1.5 hours and the sintering in step (5) was performed at 1200°C for 2 hours.

The compositions of the permanent magnet material obtained in this example are shown in Table 3, and the performance test results of the permanent magnet material are shown in Table 4.

### Example 7

This example is same as Example 1 except that the pre-sintering in step (2) was performed at 1260°C for 2 hours and the sintering in step (5) was performed at 1180°C for 1 hour.

The compositions of the permanent magnet material obtained in this example are shown in Table 3, and the performance test results of the permanent magnet material are shown in Table 4.

### Comparative Example 1

In this comparative example, permanent magnet materials were prepared in the same method as that in Example 1, except that the proportion of raw materials in step (1) was adjusted to satisfy the required composition of the permanent magnet material product of each formula.

The compositions of the permanent magnet material of each formula in this comparative example are shown in Table 3, and the performance test results of the permanent magnet material of each formula are shown in Table 4.

**Table 3 Main compositions of permanent magnet materials in Examples and Comparative Examples**

| Mass fraction/wt% | Fe₂O₃ | SrO | CaO | BaO | La₂O3 | Co₂O₃ | Al₂O 3 | Cr₂O 3 | MnO | SiO₂ |
|---|---|---|---|---|---|---|---|---|---|---|
| Example 1 | 85.2 | 1.1 | 2.1 | 0.05 | 7.45 | 3.10 | 0 | 0.30 | 0.20 | 0.45 |
| Example 2-1 | 82.4 | 4.3 | 2.1 | 0.25 | 6.5 | 2.8 | 0.5 | 0.4 | 0.2 | 0.5 |
| Example 2-2 | 83.3 | 3.3 | 2.2 | 0.4 | 5.95 | 3.0 | 0.7 | 0.3 | 0.25 | 0.55 |
| Example 2-3 | 83.7 | 2.9 | 1.7 | 0.05 | 7.0 | 2.3 | 0.95 | 0.65 | 0.20 | 0.50 |
| Example 2-4 | 84.9 | 0.5 | 2.1 | 0.3 | 7.8 | 1.85 | 1.0 | 0.80 | 0.1 | 0.50 |
| Example 3-1 | 81 | 5.0 | 3.0 | 0 | 10.0 | 1.0 | 0 | 0 | 0 | 0 |
| Example 3-2 | 87 | 0.5 | 3.0 | 0 | 8.5 | 1.0 | 0 | 0 | 0 | 0 |
| Example 3-3 | 81 | 4.5 | 0.5 | 0.5 | 6.0 | 4.0 | 1.5 | 1.5 | 0 | 0.80 |
| Example 3-4 | 81 | 4.2 | 3.0 | 0 | 5.0 | 2.6 | 2.0 | 1.0 | 0.4 | 0.40 |
| Example 3-5 | 82.2 | 4.4 | 2.0 | 0.1 | 8.5 | 1.5 | 0.5 | 0.3 | 0.1 | 0.02 |
| Example 4 | 85.3 | 1.05 | 2.0 | 0.05 | 7.50 | 3.25 | 0.05 | 0.35 | 0.20 | 0.20 |
| Example 5 | 85.0 | 1.0 | 2.4 | 0.05 | 7.3 | 2.85 | 0 | 0.6 | 0.15 | 0.6 |
| Example 6 | 85.25 | 1.15 | 2.0 | 0.05 | 7.5 | 3.10 | 0 | 0.30 | 0.20 | 0.40 |
| Example 7 | 85.2 | 1.1 | 2.05 | 0.05 | 7.55 | 3.15 | 0 | 0.30 | 0.20 | 0.45 |
| Comparative Example 1-1 | 77 | 7.0 | 4.0 | 0 | 11.0 | 1.0 | 0 | 0 | 0 | 0 |
| Comparative Example 1-2 | 81 | 5.3 | 3.3 | 0 | 10.4 | 0 | 0 | 0 | 0 | 0 |
| Comparative Example 1-3 | 86 | 0 | 3.0 | 0 | 10.0 | 1.0 | 0 | 0 | 0 | 0 |
| Comparative Example 1-4 | 84 | 5.0 | 0 | 0 | 10.0 | 1.0 | 0 | 0 | 0 | 0 |
| Comparative Example 1-5 | 91 | 5.0 | 3.0 | 0 | 0 | 1.0 | 0 | 0 | 0 | 0 |

In Tables 1, 2 and 3, the metal elements in SrO, CaO, BaO and La₂O3 are A-site elements while the metal elements in Fe₂O3, Co₂O₃, Al₂O₃, Cr₂O₃ and MnO are B-site elements. The mass fractions in Tables 1, 2, and 3 are calculated on the basis that the total mass of the oxide of A and the oxide of B is 100% from which SiO₂ is excluded. Since the products of some examples include small amounts of impurities, the total mass fractions of the compositions listed in Table 3 are slightly less than 100%.

### Performance test method

The upper and lower surfaces of the permanent magnet material products obtained in each example and comparative example were ground and then tested. The residual magnetic flux density (Br), coercivity (Hcb), intrinsic coercivity (Hcj) and maximum magnetic energy product (BH)max were measured at room temperature by TD8310 permanent magnet material test system produced by Changsha TUNKIA Co., Ltd., and the test results are shown in the following table.

**Table 4 Magnet performance test results of permanent magnet materials in Examples and Comparative Examples**

| No. | Br (Gs) | HcB (Oe) | HcJ (Oe) | (BH)max (MGOe) |
|---|---|---|---|---|
| Example 1 | 4527 | 4117 | 5939 | 5.05 |
| Example 2-1 | 4470 | 4052 | 5968 | 4.98 |
| Example 2-2 | 4490 | 4152 | 6154 | 5.01 |
| Example 2-3 | 4510 | 3998 | 5854 | 5.06 |
| Example 2-4 | 4530 | 4095 | 5924 | 5.12 |
| Example 3-1 | 4480 | 3950 | 5845 | 4.92 |
| Example 3-2 | 4470 | 3985 | 5832 | 4.93 |
| Example 3-3 | 4490 | 3996 | 5964 | 5.01 |
| Example 3-4 | 4510 | 4058 | 5823 | 5.02 |
| Example 3-5 | 4540 | 4120 | 5941 | 5.15 |
| Example 4 | 4450 | 4152 | 5847 | 5.0 |
| Example 5 | 4450 | 4057 | 5974 | 4.96 |
| Example 6 | 4460 | 3987 | 5912 | 4.95 |
| Example 7 | 4520 | 4085 | 6047 | 5.08 |
| Comparative Example 1-1 | 4351 | 3014 | 3541 | 4.51 |
| Comparative Example 1-2 | 4214 | 3258 | 3647 | 4.35 |
| Comparative Example 1-3 | 4284 | 3587 | 3987 | 4.42 |
| Comparative Example 1-4 | 4187 | 3789 | 4157 | 4.34 |
| Comparative Example 1-5 | 4472 | 3478 | 3987 | 4.78 |

As can be seen from Tables 3 and 4, with the accurate verification of the ratio of each composition and the strict controlling of processes, the permanent magnet products provided in Examples 1 to 6 of the present application can achieve the effect of having both a high residual magnetic flux density (Br) and an ultra-high intrinsic coercivity (Hcj).

In the product of Comparative Example 1-1, the content of the oxide of A was too low, leading to the serious decline of the residual magnetic flux density (Br), intrinsic coercivity (Hcj) and comprehensive magnetic performance of the final magnet.

In the product of Comparative Example 1-2, A did not include cobalt, leading to the serious decline of the residual magnetic flux density (Br), intrinsic coercivity (Hcj) and comprehensive magnetic performance of the final magnet.

In the product of Comparative Example 1-3, B did not include strontium, leading to the serious decline of the residual magnetic flux density (Br), intrinsic coercivity (Hcj) and comprehensive magnetic performance of the final magnet.

In the product of Comparative Example 1-4, B did not include calcium, leading to the serious decline of the residual magnetic flux density (Br), intrinsic coercivity (Hcj) and comprehensive magnetic performance of the final magnet.

In the product of Comparative Example 1-5, B did not include lanthanum, leading to the serious decline of the residual magnetic flux density (Br), intrinsic coercivity (Hcj) and comprehensive magnetic performance of the final magnet.

The applicant has stated that although the detailed method of the present application is described through the examples described above, the present application is not limited to the detailed method described above, which means that implementation of the present application does not necessarily depend on the detailed method described above.

## Claims

1. A permanent magnet material, comprising AB₁₂O₁₉, wherein A comprises Sr, Ca, and La, and B comprises Fe and Co; and on the basis that a total mass of an oxide of A and an oxide of B is 100%, a mass fraction of the oxide of A is 12 wt% to 18 wt%, and a mass fraction of the oxide of B is 82 wt% to 88 wt%.

2. The permanent magnet material according to claim 1, wherein in the permanent magnet material, on the basis that a total mass of an oxide of A and an oxide of B is 100%, a mass fraction of SrO is 0.5 wt% to 5.0 wt%, a mass fraction of La₂O3 is 5.0 wt% to 10.0 wt%, a mass fraction of CaO is 0.5 wt% to 3.0 wt%, a mass fraction of Fe₂O₃ is 81 wt% to 87 wt%, and a mass fraction of Co₂O₃ is 1 wt% to 4.0 wt%.

3. The permanent magnet material according to claim 1 or 2, wherein A further comprises Ba and/or other La series rare earth elements other than La;
optionally, when A comprises Ba, a mass fraction of Ba is calculated based on BaO; and on the basis that a total mass of an oxide of A and an oxide of B is 100%, a mass fraction of BaO is 0.1 wt% to 0.5 wt%, and the mass fraction of La₂O3 is 6.0 wt% to 8.5 wt%.

4. The permanent magnet material according to any one of claims 1 to 3, wherein B further comprises other transition elements of a fourth period other than iron and cobalt, which optionally comprises any one or a combination of at least two of Al, Cr or Mn;
optionally, when B comprises Al, a mass fraction of Al is calculated based on Al₂O₃; and on the basis that a total mass of an oxide of A and an oxide of B is 100%, a mass fraction of Al₂O₃ is 0.5 wt% to 2.0 wt%, and the mass fraction of Co₂O₃ is 1.5 wt% to 3.0 wt%;
optionally, when B comprises Cr, a mass fraction of Cr is calculated based on Cr₂O₃; and on the basis that a total mass of an oxide of A and an oxide of B is 100%, a mass fraction of Cr₂O₃ is 0.3 wt% to 1.5 wt%, and the mass fraction of Co₂O₃ is 1.5 wt% to 3.0 wt%;
optionally, when B comprises Mn, a mass fraction of Mn is calculated based on MnO; and on the basis that a total mass of an oxide of A and an oxide of B is 100%, a mass fraction of MnO is 0.1 wt% to 0.4 wt%, and the mass fraction of Co₂O₃ is 1.5 wt% to 3.0 wt%; and
optionally, the permanent magnet material further comprises Si, a mass fraction of Si is calculated based on SiO₂, and on the basis that a total mass of an oxide of A and an oxide of B is 100%, a mass fraction of SiO₂ is 0.02 wt% to 0.8 wt%.

5. A method for preparing the permanent magnet material according to any one of claims 1 to 4, comprising:
(1) crushing a first raw material mixture to obtain a primary crushed material; wherein the first raw material mixture comprises an iron source, a strontium source, a calcium source, a lanthanum source and a cobalt source;
(2) pre-sintering the primary crushed material obtained in step (1) to obtain a pre-sintered material;
(3) mixing the pre-sintered material obtained in step (2) and a second raw material mixture, and crushing same to obtain a secondary crushed material; wherein the second raw material mixture comprises a calcium source;
(4) performing magnetic field molding on the secondary crushed material obtained in step (3) to obtain a molded body; and
(5) pre-heating and sintering the molded body obtained in step (4) to obtain the permanent magnet material.

6. The method according to claim 5, wherein the primary crushed material in step (1) has an average solid particle size of less than or equal to 0.8 µm;
optionally, the crushing in step (1) is performed by wet mixing crushing, optionally, by wet ball milling; and
optionally, the crushing in step (1) is performed for 3 hours to 5 hours.

7. The method according to claim 5 or 6, wherein an average particle size of each element source in the first raw material mixture in step (1) is less than 2 µm.

8. The method according to any one of claims 5 to 7, wherein the pre-sintering in step (2) is performed in an air atmosphere;
optionally, the pre-sintering in step (2) is performed at a temperature of 1150°C to 1260°C, optionally at 1230°C to 1260°C; and
optionally, the pre-sintering in step (2) is performed for 0.5 hour to 3 hours, optionally for 1 hour to 2 hours.

9. The method according to any one of claims 5 to 8, wherein the crushing in step (3) is performed by wet mixing crushing, optionally, by wet ball milling;
optionally, in addition to the calcium source, the second raw material mixture in step (3) further comprises any one or a combination of at least two of a silicon source, a chromium source, an aluminum source, a boron source, a strontium source or a cobalt source;
optionally, the second raw material mixture in step (3) is a mixture of a calcium source, a silicon source and a cobalt source;
optionally, in step (3), on the basis that a mass of the pre-sintered material is 100%, a mass fraction of the calcium source in the second raw material mixture is 0.4 wt% to 1.5 wt%;
optionally, when the second raw material mixture in step (3) comprises a silicon source, on the basis that a mass of the pre-sintered material is 100%, a mass fraction of the silicon source is 0.2 wt% to 0.8 wt%;
optionally, when the second raw material mixture in step (3) comprises a chromium source, on the basis that a mass of the pre-sintered material is 100%, a mass fraction of the chromium source is 0 wt% to 0.8 wt%, not comprising 0 wt%;
optionally, when the second raw material mixture in step (3) comprises a cobalt source, on the basis that a mass of the pre-sintered material is 100%, a mass fraction of the cobalt source is 0 wt% to 0.8 wt%, not comprising 0 wt%;
optionally, when the second raw material mixture in step (3) comprises an aluminum source, on the basis that a mass of the pre-sintered material is 100%, a mass fraction of the aluminum source is 0 wt% to 0.8 wt%, not comprising 0 wt%;
optionally, when the second raw material mixture in step (3) comprises a boron source, on the basis that a mass of the pre-sintered material is 100%, a mass fraction of the boron source is 0 wt% to 0.8 wt%, not comprising 0 wt%;
optionally, when the second raw material mixture in step (3) comprises a strontium source, on the basis that a mass of the pre-sintered material is 100%, a mass fraction of the strontium source is 0.1 wt% to 1.0 wt%;
optionally, step (3) further comprises: adding a dispersant before the crushing;
optionally, the dispersant comprises any one or a combination of at least two of calcium gluconate, polyvinyl alcohol and sorbitol;
optionally, an addition amount of the dispersant is 0.2 wt% to 1.2 wt% of the mass of the pre-sintered material; and
optionally, the secondary crushed material in step (3) has an average solid particle size of less than or equal to 0.65 µm.

10. The method according to any one of claims 5 to 9, further comprising: adjusting a solid content of the secondary crushed material obtained in step (3) to 65 wt% to 80 wt% before the magnetic field molding in step (4);
optionally, the magnetic field molding in step (4) is performed at a magnetic field strength of more than or equal to 12000 Gs.

11. The method according to any one of claims 5 to 10, wherein the pre-heating in step (5) is performed at a temperature of 200°C to 400°C;
optionally, the pre-heating in step (5) is performed for 0.5 hour to 2 hours;
optionally, the sintering in step (5) is performed at a temperature of 1150°C to 1250°C, optionally at 1180°C to 1220°C;
optionally, the sintering in step (5) is performed for 0.5 hour to 3 hours, optionally for 0.5 hour to 2 hours; and
optionally, the sintering in step (5) is performed in an oxygen-rich atmosphere, optionally in an air atmosphere.

12. The method according to any one of claims 5 to 11, comprising:
(1) performing wet ball milling on a first raw material mixture for 3 hours to 5 hours to obtain a primary crushed material; wherein the first raw material mixture comprises an iron source, a strontium source, a calcium source, a lanthanum source and a cobalt source; an average particle size of each element source in the first raw material mixture is less than 2 µm; and the primary crushed material has an average solid particle size of less than or equal to 0.8 µm;
(2) pre-sintering the primary crushed material obtained in step (1) at 1230°C to 1260°C for 1 hour to 2 hours in an air atmosphere to obtain a pre-sintered material;
(3) mixing the pre-sintered material obtained in step (2) with a second raw material mixture and a dispersant and performing wet ball milling on same to obtain a secondary crushed material; wherein the second raw material mixture in step (3) is a mixture of a calcium source, a silicon source, a chromium source and a cobalt source; in the second raw material mixture, on the basis that a mass of the pre-sintered material is 100%, a mass fraction of the calcium source is 0.4 wt% to 1.5 wt%, a mass fraction of the silicon source is 0.2 wt% to 0.8 wt%, and a mass fraction of the cobalt source is 0 wt% to 0.8 wt%, not comprising 0 wt%; the secondary crushed material has an average solid particle size of less than or equal to 0.65 µm; and an addition amount of the dispersant is 0.2 wt% to 1.2 wt% of the mass of the pre-sintered material;
(4) adjusting a solid content of the secondary crushed material obtained in step (3) to 65 wt% to 80 wt% and performing magnetic field molding on the secondary crushed material at a magnetic field strength of more than or equal to 12000 Gs to obtain a molded body; and
(5) pre-heating the molded body obtained in step (4) at 200°C to 400°C for 0.5 hour to 2 hours and sintering same at 1180°C to 1220°C for 0.5 hour to 2 hours in an air atmosphere to obtain a permanent magnet material.
